# EUROPEAN PATENT APPLICATION

(11) **EP 4 239 086 A1**
(43) Date of publication of application: **06.09.2023**
(21) Application number: 21884932.1
(22) Date of filing: 13.10.2021
(51) Int. Cl.: C22B 7/00, C22B 23/00, C22B 47/00, C22B 21/00, C22B 3/38, H01M 10/54

(54) **EXTRACTION METHOD FOR REMOVING ALUMINUM FROM LEACHING SOLUTION OF TERNARY BATTERY MATERIAL**

(30) Priority: 29.10.2020 CN 202011176863
(71) Applicant: Hunan Brunp Recycling Technology Co., Ltd., Changsha, Hunan 410600 (CN); Guangdong Brunp Recycling Technology Co., Ltd, Foshan, Guangdong 528137 (CN); Hunan Brunp EV Recycling Co., Ltd., Changsha, Hunan 410600 (CN)
(72) Inventor: ZHANG, Rongrong, Changsha, Hunan 410600 (CN); LI, Weixin, Changsha, Hunan 410600 (CN); LIU, Yongqi, Changsha, Hunan 410600 (CN); GONG, Qinxue, Changsha, Hunan 410600 (CN); LI, Changdong, Changsha, Hunan 410600 (CN)
(74) Representative: Meyer, Thorsten
(86) International application number: PCT/CN2021/123402
(87) International publication number: WO 2022/089203

(57) **Abstract**

Disclosed is a method for removing aluminum in a ternary battery material leachate by adopting an extraction method, which comprises the following steps: (1) saponification: mixing an extraction solvent with a saponifying agent to obtain a saponified extraction solvent; (2) extraction: mixing the ternary battery material leachate with the saponified extraction solvent to obtain a loaded organic phase and a raffinate; (3) back extraction: mixing the loaded organic phase with a back-extraction agent, followed by performing a back-extraction to obtain an organic phase and a back-extraction solution; the extraction solvent comprises an extracting agent and a diluent. The extraction method is adopted to separate nickel, cobalt, manganese and aluminum, having the advantages of less heavy metal entrainment, short process flow, and high metal recovery rate. The method adopts an extraction method to separate the nickel, cobalt, manganese and aluminum, in which high amount of aluminum was loaded in the loaded organic phase. The extraction rate of the aluminum can reach 97.42 percent through a 4-stage countercurrent extraction, and the loss rate of the nickel, cobalt and manganese is only about 0.1 percent.

## Description

### TECHNICAL FIELD

The present disclosure belongs to the field of hydrometallurgy and particularly relates to an extraction method for removing aluminum from ternary battery material leachate.

### BACKGROUND

In recent years, gradually strengthened environmental protection consciousness of the public society, and the research and development of power batteries, battery management systems and the like carried out by colleges, universities, scientific research units and enterprises, electric automobile market is rapidly developed. With the rapid industrialization of new energy vehicles, the sales volume of new energy vehicles will be rapidly increased, leading to a rise of the retention volume of lithium ion batteries in a geometric progression. Meanwhile, the pollution and the appropriate resource recycling of waste lithium ion power batteries become problems which are generally concerned and urgently to be solved at present and even in future at home and abroad.

Nickel and cobalt are an important strategic resource, and recycling of secondary resources of nickel and cobalt in waste lithium ion batteries is gradually emphasized. Besides nickel and cobalt, batteries also contain a large amount of aluminum, manganese, iron, copper, zinc and the like, and the effective separation of nickel, cobalt, manganese and aluminum has general significance in the aspect of recycling secondary resources.

At present, hydrolysis precipitation method is generally adopted for removing aluminum from metal liquid. And the precipitation method has the advantages of easy reaction control, high reaction speed, high efficiency in aluminum removal, easy filtration of precipitation slag, simple process, low equipment investment and the like, and has good economic and environmental benefit. However, there are shortages of heavy metal coprecipitation and adsorption in the precipitation method, which leads to the problems of large slag amount, low heavy metal recovery rate, aluminum slag recycling difficulty, poor working environment and the like. Many researchers at home and abroad separate aluminum by a solvent extraction method, but the method has certain limitations, and the extracting agents comprise: versatic 10 extracting agent, di-n-butyl Dithiophosphate (DBTPA), di (2-ethylhexyl) Dithiophosphate (DETPA), Cyanex 921, naphthenic acid and the like. The main challenges of the extraction method for separating nickel, cobalt and manganese from aluminum are insufficient researchers, unclear extraction mechanism, lack of specific extracting agent, easy system emulsification and the like.

### SUMMARY OF THE INVENTION

The objective of the present disclosure is to provide an extraction method for removing aluminum from a ternary battery material leachate, and the ternary battery material leachate containing aluminum is a nickel-cobalt-manganese solution from which iron and zinc are removed. the extraction method adopts a common acidic extracting agent, and the extraction system has a good phase separation, less heavy metal entrainment, no slag generation, short process flow and high metal recovery rate, which provides a new thought in the field of heavy metal and aluminum separation.

To achieve the above objective, the embodiments of the present disclosure adopt the following technical solutions: An extraction method for removing aluminum in a ternary battery material leachate comprises the following steps:
(1) Saponification: mixing an extraction solvent with a saponifying agent to obtain a saponified extraction solvent; the extraction solvent includes an extracting agent and a diluent;
(2) Extraction: mixing a ternary battery material leachate with the saponified extraction solvent to obtain a mixture I, performing an extraction to the mixture I to obtain a loaded organic phase and a raffinate;
(3) Back-extraction: mixing the loaded organic phase with a back-extraction agent to obtain a mixture II, performing a back-extraction to the mixture II to obtain an organic phase and a back-extraction solution.

With restriction of the theory, saponification is a process of ion exchange. In the saponification stage, Na⁺ exchanges with H⁺ in the extraction solvent (mixture of an extracting agent and a diluent) and Na⁺ enters into the organic phase; in the extraction stage, Na⁺ exchanges with the metal to be extracted, and the metal to be extracted enters into the organic phase to achieve a separation of the metal and the impurities.

In some embodiments, the saponification rate is 42-47%.

In some embodiments, the extracting agent is an acidic extracting agent.

In other embodiments, the acidic extracting agent is at least one selected from the group consisting of 2-ethylphosphonic acid mono (2-ethylhexyl) ester, bis (2-ethylhexyl) phosphoric acid and bis (2,4, 4-trimethylpentyl) phosphinic acid.

In some embodiments, the diluent is at least one selected from the group consisting of kerosene, n-hexane, cyclohexane, octanol, and 2-octanol.

In some embodiments, volume ratio of the extracting agent to the diluent is (0.01-0.4): 1.

In other embodiments, the volume ratio of the extracting agent to the diluent is (0.1-0.35): 1.

In other embodiments, the volume ratio of the extracting agent to the diluent is about 0.25: 1.

In some embodiments, in step (1), the saponifying agent is a sodium salt.

More preferably, the sodium salt is sodium hydroxide.

In some embodiments, in step (2), the ternary battery material leachate mainly contains Ni²⁺, Co²⁺, Mn²⁺, Al³⁺, Ca²⁺, Mg²⁺, Li⁺, SO₄²⁻, and has no Fe²⁺, Zn²⁺; the Al³⁺ concentration in the ternary battery material leachate falls within 3.0-7.0 g/L, and the total concentration of Ni²⁺, Co²⁺, Mn²⁺ in the ternary battery material leachate falls within 50-70 g/L.

In some embodiments, a processing procedure is further included between step (2) and step (3), in which the loaded organic phase is washed with sulfuric acid or the back extraction solution.

In some embodiments, in the step (2), the extraction is carried out at a temperature of 25°C-60°C, and the extraction time is 3-8 min.

In some embodiments, in the step (2), the extraction is a single-stage extraction or multi-stage countercurrent extraction with 3-7 extraction stages.

In some embodiments, in the step (3), the back-extraction agent is selected from the group consisting of hydrochloric acid, sulfuric acid and acetic acid.

In other embodiments, the concentration of the back-extraction is 2 to 4 mol/L.

The embodiments of the present disclosure also provide the application of the method in metal material recovery.

The embodiments of the present disclosure have the following advantages:
(1) the present disclosure adopts the saponified extraction solvent in the extraction method to separate nickel, cobalt, manganese and aluminum in the ternary battery material leachate, resulting in less heavy metal entrainment, short process flow, and high metal recovery rate.
(2) the present disclosure adopts the extraction method to separate nickel, cobalt, manganese and aluminum in the ternary battery material leachate, in which the aluminum in the loaded organic phase is high, the extraction rate of aluminum can reach 97.42% through 4-stage countercurrent extraction, and the loss rate of nickel, cobalt and manganese is only about 0.1%.
(3) the present disclosure adopts the extraction method to separate nickel, cobalt, manganese and aluminum in the ternary battery material leachate, which has no traditional solid waste aluminum slag generated, while effectively recover the aluminum. The extraction method provides a new idea in the field of separation of heavy metal and aluminum.

### BRIEF DESCRIPTION OF DRAWINGS

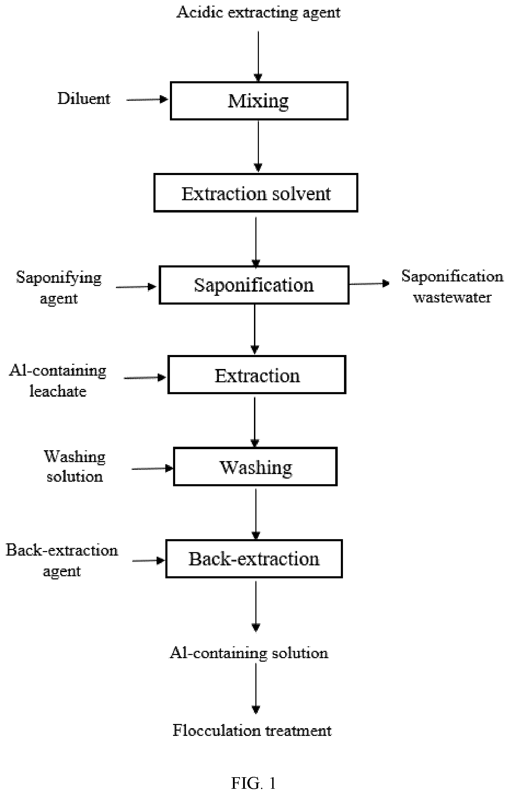

FIG. 1 is the process flow chart of the present disclosure.

### DETAILED DESCRIPTION OF THE ILLUSTRATED EXAMPLES

In order to fully understand the present disclosure, some experimental schemes of the present disclosure will be described below in conjunction with examples to further illustrate the characteristics and advantages of the present disclosure. Any change or alteration that does not deviate from the gist of the present disclosure can be understood by those skilled in the art. The scope of protection of the present disclosure is determined by the scope of the claims.

### Example 1

A method for removing aluminum in a ternary battery material leachate by adopting an extraction method comprises the following steps:
(1) saponification: preparing an extraction solvent for extracting aluminum: mixing bis (2,4, 4-trimethylpentyl) phosphinic acid and kerosene according to a volume ratio of 1:4 to prepare an extraction solvent (a blank organic phase) for extracting aluminum; mixing the extraction solvent with a saponifying agent (concentrated alkali solution) to obtain the saponified extraction solvent, in which the saponification rate was 45%;
(2) Extraction: mixing 50mL aluminum-containing solution (wherein Al³⁺ is 6.4g/L, Ni²⁺ is 27.17g/L, Co²⁺ is 16.29g/L and Mn²⁺ is 9.81g/L) with 50mL of the saponified extraction solvent followed by performing an extraction at temperature of 40°C for 5 min to obtain an loaded organic phase and a raffinate. Al³⁺ in the raffinate was detected to be 3.4g/L, and the single-stage extraction rate of Al was 46.88%;
(3) Back-extraction: mixing the loaded organic phase with 10mL of 2mol/L sulfuric acid, followed by phase separating to obtain an organic phase and a back-extraction solution, wherein Al³⁺ in the back-extraction solution is 14.95g/L, Ni²⁺ is 0.017g/L, Co²⁺ is 0.002g/L and Mn²⁺is 0.011g/L;

Under the same condition, the selectivity of an organic system to Al in the method using di (2,4, 4-trimethyl amyl) phosphinic acid as the extracting agent is higher than that in the method using naphthenic acid, and the extraction rate of nickel, cobalt and manganese is much lower.

### Example 2

A method for removing aluminum in a ternary battery material leachate by adopting an extraction method comprises the following steps:
(1) saponification: preparing an extraction solvent for extracting aluminum: mixing bis (2,4,4-trimethylpentyl) phosphinic acid and kerosene according to the volume ratio of 1:4 to prepare an extraction solvent (a blank organic phase) for extracting aluminum, mixing the extraction solvent with a saponifying agent (concentrated alkali solution) to obtain the saponified extraction solvent, in which the saponification rate was 45%;
(2) Extraction: mixing 50mL aluminum-containing solution (wherein Al³⁺ is 6.4g/L, Ni²⁺ is 27.17g/L, Co²⁺ is 16.29g/L and Mn²⁺ is 9.81g/L) with 50mL of the saponified extraction solvent, followed by performing a 5-stage countercurrent extraction to obtain an loaded organic phase and a raffinate. Al³⁺ in the raffinate was detected to be 0.208g/L, and the 5-stage countercurrent extraction rate of Al was 96.75%;
(3) Back extraction: mixing the loaded organic phase with 10mL of 4mol/L sulfuric acid, followed by phase separating to obtain an organic phase and a back-extraction solution, wherein Al³⁺ in the back-extraction solution is 30.58g/L, Ni²⁺ is 0.007g/L, Co²⁺ is 0.002g/L and Mn²⁺is 0.009g/L.

### Example 3

A method for removing aluminum in a ternary battery material leachate by adopting an extraction method comprises the following steps:
(1) saponification: preparing an extraction solvent for extracting aluminum: mixing bis (2,4,4-trimethylpentyl) phosphinic acid and kerosene with a volume ratio of 1:4 to prepare an extraction solvent (a blank organic phase) for extracting aluminum, mixing the extraction solvent with a saponifying agent (concentrated alkali solution) to obtain a saponified extraction solvent, in which the saponification rate was 45%;
(2) Extraction: mixing 50mL aluminum-containing solution (wherein Al³⁺ is 6.4g/L, Ni²⁺ is 27.17g/L, Co²⁺ is 16.29g/L and Mn²⁺ is 9.81g/L) with 50mL of the saponified extraction solvent, followed by performing a 4-stage countercurrent extraction to obtain an loaded organic phase and a raffinate. Al³⁺ in the raffinate was detected to be 0.165g/L, and the 4-stage countercurrent extraction rate of Al was 97.42%;
(3) Back-extraction: mixing the loaded organic phase with 10mL of 4mol/L sulfuric acid, followed by phase separating to obtain an organic phase and a back-extraction solution, wherein Al³⁺ in the back-extraction solution is 31.03g/L, Ni²⁺ is 0.010g/L, Co²⁺ is 0.004g/L and Mn²⁺is 0.007g/L.

### Comparative Example 1

A method for removing aluminum in a ternary battery material leachate by adopting an extraction method comprises the following steps:
(1) saponification: preparing an extraction solvent for extracting aluminum: mixing Naphthenic acid and kerosene with a volume ratio of 1:4 to prepare an extraction solvent (a blank organic phase) for extracting aluminum, mixing the extraction solvent with a saponifying agent (concentrated alkali solution) to obtain a saponified extraction solvent, in which the saponification rate was 45%;
(2) Extraction: mixing 50mL aluminum-containing solution (wherein Al³⁺ is 6.4g/L, Ni²⁺ is 27.17g/L, Co²⁺ is 16.29g/L and Mn²⁺ is 9.81g/L) with 50mL of the saponified extraction solvent, followed by performing an extraction at temperature of 40°C for 5 min to obtain an loaded organic phase and a raffinate. Al³⁺ in the raffinate was detected to be 3.8g/L, and the single stage extraction rate of Al was 40.63%;
(3) Back-extraction: mixing the loaded organic phase with 10mL of 2mol/L sulfuric acid, followed by phase separating to obtain an organic phase and a back-extraction solution, wherein Al³⁺ in the back-extraction solution is 12.96g/L, Ni²⁺ is 2.15g/L, Co²⁺ is 0.94g/L and Mn²⁺is 1.04g/L.

Naphthenic acid was used as an extracting agent, and after the single stage extraction, the extraction rate of Al was 40.63%, but the amount of the adsorbed heavy metals was also high.

### Comparative Example 2

A method for removing aluminum in a ternary battery material leachate by adopting an extraction method comprises the following steps:
(1) saponification: preparing an extraction solvent for extracting aluminum: mixing naphthenic acid and kerosene with a volume ratio of 1:3 to prepare an extraction solvent (a blank organic phase) for extracting aluminum, mixing the extraction solvent with a saponifying agent (concentrated alkali solution) to obtain a saponified extraction solvent, in which the saponification rate was 45%;
(2) Extraction: mixing 50mL aluminum-containing solution (wherein Al³⁺ is 6.4g/L, Ni²⁺ is 27.17g/L, Co²⁺ is 16.29g/L and Mn²⁺ is 9.81g/L) with 50mL of the saponified extraction solvent, followed by performing a 4-stage countercurrent extraction to obtain an loaded organic phase and a raffinate. Al³⁺ in the raffinate was detected to be 0.35g/L, and the single stage extraction rate of Al was 94.53%;
(3) Back-extraction: mixing the loaded organic phase with 10mL of 2mol/L sulfuric acid, followed by phase separating to obtain an organic phase and a back-extraction solution, wherein Al³⁺ in the back-extraction solution was 31.03g/L, Ni²⁺ is 0.010g/L, Co²⁺ is 0.94g/L and Mn²⁺is 0.007g/L.

Naphthenic acid was used as an extracting agent, and after the 4-stage extraction, the extraction rate of Al was 94.53%, but the amount of the adsorbed heavy metals was also high.

### Comparative Example 3

A method for removing aluminum in a ternary battery material leachate by adopting an extraction method comprises the following steps:
(1) saponification: preparing an extraction solvent for extracting aluminum: mixing bis(2-ethylhexyl) phosphate and kerosene with a volume ratio of 1:4 to prepare an extraction solvent (a blank organic phase) for extracting aluminum, mixing the extraction solvent with a saponifying agent (concentrated alkali solution) to obtain a saponified extraction solvent, in which the saponification rate was 45%;
(2) Extraction: mixing 50mL aluminum-containing solution (wherein Al³⁺ is 6.4g/L, Ni²⁺ is 27.17g/L, Co²⁺ is 16.29g/L and Mn²⁺ is 9.81g/L) with 50mL of the saponified extraction solvent, followed by performing a 4-stage countercurrent extraction to obtain an loaded organic phase and a raffinate. Al³⁺ in the raffinate was detected to be 2.29g/L, and the single stage extraction rate of Al was 35.78%;
(3) Back-extraction: mixing the loaded organic phase with 10mL of 2mol/L sulfuric acid, followed by phase separating to obtain an organic phase and a back-extraction solution, wherein Al³⁺ in the back-extraction solution is 12.96g/L, Ni²⁺ is 2.15g/L, Co²⁺ is 0.94g/L and Mn²⁺is 1.04g/L.

Bis(2-ethylhexyl) phosphate was used as an extracting agent, and after the single stage extraction, the extraction rate of Al can reach 35.78%, but the extraction rate is relatively low and the amount of the adsorbed heavy metals was also high.

The above embodiments are preferred mode of the present disclosure, but the present disclosure is not limited to the above embodiments, and any other alternation, modifications and simplifications which do not depart from the spirit and principle of the present disclosure should be construed as equivalents thereof, and are included in the scope of the present disclosure.

## Claims

1. An extraction method for removing aluminum from a ternary battery material leachate, comprising the following steps:
(1) mixing an extraction solvent with a saponifying agent to obtain a saponified extraction solvent; the extraction solvent comprises an extracting agent and a diluent;
(2) mixing the ternary battery material leachate with the saponified extraction solvent to obtain a mixture I, performing an extraction to the mixture I to obtain a loaded organic phase and a raffinate;
(3) mixing the loaded organic phase with a back-extraction agent to obtain a mixture II, performing a back-extraction to the mixture II to obtain an organic phase and a back-extraction solution.

2. The extraction method of claim 1, wherein the extracting agent is an acidic extracting agent.

3. The extraction method of claim 2, wherein the acidic extracting agent is at least one selected from the group consisting of 2-ethylphosphonic acid mono (2-ethylhexyl) ester, bis (2-ethylhexyl) phosphoric acid, and bis (2,4,4-trimethylpentyl) phosphinic acid.

4. The extraction method of claim 1, wherein the diluent is at least one selected from the group consisting of kerosene, n-hexane, cyclohexane, octanol, and 2-octanol.

5. The extraction method of claim 1, wherein the extraction solvent comprises the extracting agent and the diluent in a volume ratio of (0.01-0.4): 1.

6. The extraction method of claim 1, wherein in step (1), the saponifying agent is a sodium salt; wherein the sodium salt is sodium hydroxide.

7. The extraction method of claim 1, wherein the ternary battery material leachate comprises Ni²⁺, Co²⁺, Mn²⁺, Al³⁺, Ca²⁺, Mg²⁺, Li⁺, SO₄²⁻, and does not comprise Fe²⁺ and Zn²⁺; the ternary battery material leachate has an Al³⁺ concentration falling within 3.0-7.0 g/L; the ternary battery material leachate has an total concentration of Ni²⁺, Co²⁺ and Mn²⁺ falling within 50-70 g/L.

8. The extraction method of claim 1, wherein a washing procedure is further included between step (2) and step (3), in the washing procedure, the loaded organic phase is washed with sulfuric acid or the back-extraction solution; wherein in step (2), the extraction is a single-stage extraction or a multi-stage countercurrent extraction.

9. The extraction method of claim 1, wherein in step (3), the back-extraction agent is selected from the group consisting of hydrochloric acid, sulfuric acid, and acetic acid.

10. Use of the extraction method of any one of claims 1 to 9 in metallic material recovery.
